# EUROPÄISCHE PATENTANMELDUNG

(11) **EP 4 530 155 A1**
(43) Veröffentlichungstag der Anmeldung: **02.04.2025**
(21) Anmeldenummer: 23200709.6
(22) Anmeldetag: 29.09.2023
(51) Int. Cl.: B61L 27/57, B61L 25/02

(54) **INSPEKTIONSVERFAHREN UND INSPEKTIONSSYSTEM FÜR FAHRZEUGE**

(71) Anmelder: Gestalt Robotics GmbH, 10997 Berlin (DE)
(72) Erfinder: STAUFENBIEL, Thomas, 10997 Berlin (DE); FUNK, Eugen, 10997 Berlin (DE)
(74) Vertreter: v. Bezold & Partner Patentanwälte - PartG mbB

(57) **Zusammenfassung**

Die Erfindung betrifft u.a. ein Inspektionsverfahren zum Inspizieren eines Fahrzeugs (12), wobei das Inspektionsverfahren aufweist: Überwachen, vorzugsweise Verfolgen, einer aktuellen Fahrzeugposition des Fahrzeugs (12) entlang eines Fahrwegs (16) für das Fahrzeug (12) mittels eines Sensorsystems (22); Bestimmen mindestens eines Auslösezeitpunkts einer Scannervorrichtung (18) in Abhängigkeit von der überwachten aktuellen Fahrzeugposition; und Auslösen der Scannervorrichtung (18) zum bestimmten mindestens einen Auslösezeitpunkt zum Scannen mindestens eines gewünschten Inspektionsabschnitts (20) des Fahrzeugs (12).

## Beschreibung

### Technisches Gebiet

Die Erfindung betrifft ein Inspektionsverfahren und ein Inspektionssystem zum Inspizieren eines Fahrzeugs, vorzugsweise eines Schienenfahrzeugs. Die Erfindung betrifft ferner ein Computerprogrammprodukt.

### Technischer Hintergrund

Oftmals sind visuelle Aufnahme von Fahrzeugen, wie bspw. von Zügen, erforderlich, um bspw. die Inspektion oder Wartung des Fahrzeugs zu erleichtern. Neben der manuellen Inspektion oder manuellen Bildaufnahmen durch Mitarbeiter am Fahrzeug können dazu auch Verfahren aus den Bereichen maschinelles Sehen oder künstliche Intelligenz genutzt werden. Heute bekannte Verfahren nutzen eine fest installierte Kamera, um in äquidistanten Zeitabständen Bildaufnahmen von Abschnitten des vorbeifahrenden Fahrzeugs zu erzeugen.

Für die automatisierte Inspektion von bestimmten Objekten am Fahrzeug ist es notwendig, diese eindeutig mit der Kamera aufzunehmen. Bei äquidistanten Zeitabständen ist dies jedoch nur mit einer unzureichenden Genauigkeit möglich, da die Fahrzeuggeschwindigkeit nicht konstant ist und damit die Fahrzeugposition relativ zum Start der Aufnahme eher zufällig sind. Dabei entstehen bspw. Aufnahmen, die das anvisierte Objekt eher zufällig treffen.

Außerdem gibt es viele weitere problematische Fälle zu betrachten. Sollte das Fahrzeug während der Inspektion stehen bleiben, werden Bildaufnahmen von der gleichen Stelle des Fahrzeugs generiert und verursachen dadurch hohe und unnötige Prozessierungs- und Speicherungskosten. Bewegt sich der Zug etwas langsamer oder etwas schneller als erwartet, werden die Daten unbrauchbar zur Detektion von Defekten oder Anomalien. Denn durch die Überlappungen oder Lücken zwischen den fotografierten Abschnitten wird die automatische Analyse erschwert oder unmöglich gemacht.

Die WO 2018/087340 A2 betrifft ein Inspektionssystem und ein Inspektionsverfahren zur automatisierten Inspektion eines technischen Funktionszustandes von Inspektionsabschnitten eines Fahrzeuges mit einem Sensorsystem zur Aufnahme von IST-Rohdaten von zu inspizierenden Inspektionsabschnitten des Fahrzeuges. Beispielsweise kann eine Kamera durch eine Lichtschranke getriggert sein. Das Sensorsystem umfasst zumindest ein Kamerasystem zur Aufnahme von Flächenbildern. Das Kamerasystem kann kontinuierlich und getriggert aufnehmende Kameras aufweisen.

Der Erfindung liegt die Aufgabe zu Grunde, eine verbesserte Technik zur Inspektion von Fahrzeugen, vorzugsweise von Zügen, zu schaffen, die es ermöglicht, mit einer hohen Genauigkeit eine Aufnahme eines gewünschten Inspektionsabschnitts eines an einer Scannervottichtung vorbeifahrenden Fahrzeugs zu ermöglichen, vorzugsweise mit einem vergleichsweise geringen Prozessierungs- und Speicherungsaufwand.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft ein (z. B. voll- oder teilautomatisiertes) Inspektionsverfahren zum Inspizieren eines Fahrzeugs, vorzugsweise eines Schienenfahrzeugs (z. B. Zug, wie Triebzug). Das Inspektionsverfahren weist ein Überwachen, vorzugsweise Verfolgen, einer aktuellen Fahrzeugposition des Fahrzeugs entlang eines (z. B. vorgegebenen) Fahrwegs (z. B. Schiene oder Straße) für das Fahrzeug mittels eines Sensorsystems auf. Das Inspektionsverfahren weist ferner ein Bestimmen mindestens eines (zukünftigen) Auslösezeitpunkts einer, vorzugsweise kameragestützten, Scannervorrichtung (z. B. Dachscannervorrichtung, Unterfluscannervorrichtung oder Längsseitenscannervorrichtung) in Abhängigkeit von der überwachten aktuellen Fahrzeugposition auf. Das Inspektionsverfahren weist ferner ein Auslösen der Scannervorrichtung zum bestimmten mindestens einen Auslösezeitpunkt zum Scannen mindestens eines gewünschten Inspektionsabschnitts des Fahrzeugs auf.

Vorteilhaft können sich durch den oben beschriebenen Ansatz enorme Unterschiede und Vorteile zu üblichen Verfahren ergeben. Die Bilddaten bzw. Scannerdaten können die anvisierten Objekte im gleichbleibenden Format abbilden/scannen. Dies ermöglicht eine automatische Analyse durch Bildverarbeitungssoftware. Es ist keine extrem aufwendige KI-Software zur Auswertung notwendig, da die aufgenommenen Bilder kaum bis keine Verschiebungen zueinander aufweisen, sondern im Wesentlichen gleiche Bildausschnitte zeigen. Erst dadurch können die Voraussetzungen zur automatischen Inspektion mittels Bildverarbeitungsalgorithmen, die auf die Aufnahmen der Scannervorrichtung angewendet werden, geschaffen werden. Vorteilhaft können dadurch auch adaptive, flexible und automatische Fahrzeuginspektionssysteme gefördert werden. Es kann eine überschüssige Speicherung (IT-Infrastruktur, Kosten) von unnötigen Bildern im Falle eines Fahrzeugstillstandes verhindert werden. Es kann ferner eine überschüssige Verarbeitung (Energie, Kosten) von unnötigen Bildern im Falle eines Fahrzeugstillstandes verhindert werden. Es müssen auch nicht unnötig viele speicherintensive und verarbeitungsintensive Scanneraufnahmen mit dem Ziel gemacht werden, den gewünschten Inspektionsabschnitt möglichst gut zu treffen. Stattdessen ermöglicht die sehr präzise Bestimmung des Auslösezeitpunkts, dass nur der tatsächlich gewünschte Inspektionsabschnitt gescannt wird.

Es ist möglich, dass nur ein einziger Auslösezeitpunkt für die Scannervorrichtung bestimmt wird und die Scannervorrichtung zu dem bestimmten einen einzigen Auslösezeitpunkt zum Scannen mindestens eines gewünschten Inspektionsabschnitts ausgelöst wird.

Es ist auch möglich, dass mehrere Auslösezeitpunkte für die Scannervorrichtung bestimmt werden und die Scannervorrichtung jeweils zu den bestimmten Auslösezeitpunkten zum Scannen mehrerer gewünschter Inspektionsabschnitte ausgelöst wird.

Es ist auch möglich, dass mehrere Scannervorrichtungen umfasst sind und mindestens ein Auslösezeitpunktje Scannervorrichtung bestimmt wird und die jeweilige Scannervorrichtung zu dem jeweiligen mindestens einen Auslösezeitpunkt ausgelöst wird.

Vorzugsweise kann das Überwachen, das Bestimmen und/oder das Auslösen automatisch mittels einer Verarbeitungsvorrichtung ausgeführt werden.

In einem Ausführungsbeispiel weist das Sensorsystem mehrere Sensorvorrichtungen, vorzugsweise aufweisend mindestens einen binären Positionssensoren (z. B. Lichtschranke) und/oder mindestens eine Geschwindigkeitserfassungsvorrichtung (z. B. Lidarvorrichtung, Radarvorrichtung und/oder Kameravorrichtung), auf. Vorteilhaft können die mehreren Sensorvorrichtungen bspw. redundante Messungen ermöglichen, um bspw. auch bei schwierigen (z. B. Witterungs-) Verhältnissen eine hohe Genauigkeit bei der Überwachung der aktuellen Fahrzeugposition zu ermöglichen.

In einem weiteren Ausführungsbeispiel weist das Überwachen der aktuellen Fahrzeugposition eine Sensorfusion (Sensordatenfusion) von Signalen der mehreren Sensorvorrichtungen des Sensorsystems auf. Vorteilhaft kann damit eine besonders hohe Genauigkeit bei der Überwachung der aktuellen Fahrzeugposition ermöglicht werden.

In einer Ausführungsform weist das Sensorsystem mindestens einen binären Positionssensor, vorzugsweise Lichtschranke, auf. Optional kann ein Signal des mindestens einen binären Positionssensors angeben, dass ein vorbestimmtes Teil des Fahrzeugs den jeweiligen binären Positionssensor passiert (hat). Vorzugsweise kann das vorbestimmte Teil ein Rad oder ein Fahrwerk oder ein Drehgestell des Fahrzeugs sein. Vorteilhaft kann mittels des binären Positionssensors sehr genau an einer bestimmten Stelle an dem Fahrweg die Fahrzeugposition erfasst werden.

In einer weiteren Ausführungsform weist das Überwachen der aktuellen Fahrzeugposition ferner ein Erfassen einer jeweils aktuellen Fahrzeugposition entlang des Fahrwegs mittels mehrerer binärer Positionssensoren, vorzugsweise Lichtschranken, des Sensorsystems auf. Optional können die mehreren binären Positionssensoren voneinander beabstandet entlang des Fahrwegs und/oder beidseitig entlang des Fahrwegs angeordnet sein. Vorteilhaft kann mittels der binären Positionssensoren sehr genau an mehreren bestimmten Stellen entlang des Fahrwegs die Fahrzeugposition erfasst werden. Zwischen diesen hochgenau erfassten Fahrzugpositionen kann die aktuelle Fahrzeugposition bspw. geschätzt werden. Beidseitig angeordnete binären Positionssensoren ermöglichen redundante Messungen.

In einer Ausführungsvariante weist das Inspektionsverfahren ferner ein Überwachen einer aktuellen Fahrgeschwindigkeit des Fahrzeugs entlang des Fahrwegs mittels mindestens einer Geschwindigkeitserfassungsvorrichtung des Sensorsystems auf. Vorzugsweise kann das Bestimmen des mindestens einen Auslösezeitpunkts ferner in Abhängigkeit von der überwachten aktuellen Fahrgeschwindigkeit des Fahrzeugs erfolgen. Vorteilhaft kann die Überwachung der aktuellen Fahrgeschwindigkeit eine besonders genaue Bestimmung des Auslösezeitpunkts ermöglichen.

Vorzugsweise kann das Überwachen der aktuellen Fahrgeschwindigkeit automatisch mittels einer Verarbeitungsvorrichtung ausgeführt werden.

In einer weiteren Ausführungsvariante weist das Überwachen der aktuellen Fahrzeugposition ein Schätzen, vorzugsweise Extrapolieren, der aktuellen Fahrzeugposition aus einer zuletzt mittels eines binären Positionssensors (z. B. der mehreren binären Positionssensoren) des Sensorsystems erfassten aktuellen Fahrzeugposition und der überwachten aktuellen Fahrgeschwindigkeit auf. Vorteilhaft kann damit an Positionen zwischen hochgenau mittels binärer Positionssensoren erfasster Fahrzugpositionen die aktuelle Fahrzeugposition sehr genau durch Berücksichtigung der aktuellen Fahrgeschwindigkeit geschätzt werden.

In einem Ausführungsbeispiel werden bei dem Überwachen der aktuellen Fahrgeschwindigkeit die Signale der mindestens einen Geschwindigkeitserfassungsvorrichtung zum Erkennen eines Fahrzeuganfangs des Fahrzeugs und/oder zum Erkennen eines Fahrzeugendes des Fahrzeugs und/oder zum Erkennen mindestens eines Wagenübergangs des Fahrzeugs ausgewertet.

In einem weiteren Ausführungsbeispiel weist das Überwachen der aktuellen Fahrgeschwindigkeit eine Sensorfusion von Signalen mehrerer Geschwindigkeitserfassungsvorrichtungen des Sensorsystems auf. Vorteilhaft kann damit eine sehr genaue Überwachung der aktuellen Geschwindigkeit und damit eine sehr präzise Bestimmung des Auslösezeitpunkts ermöglicht werden, selbst bei schwierigen (z. B. Witterungs-) Verhältnissen.

In einer Ausführungsform weist die mindestens eine Geschwindigkeitserfassungsvorrichtung auf:
- mindestens eine Lidarvorrichtung; und/oder
- mindestens eine Radarvorrichtung; und/oder
- mindestens eine Kameravorrichtung.

In einer weiteren Ausführungsform erfolgt das Bestimmen des mindestens einen Auslösezeitpunkts, wenn:
- ein Abstand zwischen einer Position der Scannervorrichtung und der überwachten aktuellen Fahrzeugposition kleiner oder gleich ein vorgegebener Abstandsgrenzwert ist; und/oder
- eine Zeitdauer, bis das Fahrzeug die Scannervorrichtung erreicht, kleiner oder gleich ein vorgegebener Zeitgrenzwert ist, wobei vorzugsweise die Zeitdauer aus der überwachten aktuellen Fahrzeugposition und optional einer überwachten aktuellen Fahrgeschwindigkeit des Fahrzeugs entlang des Fahrwegs ermittelt wird.

Vorteilhaft kann damit erreicht werden, dass der Auslösezeitpunkt erst bestimmt wird, wenn das Fahrzeug sehr nah bzw. ausreichend nah an der Scannervorrichtung ist. Vorteilhaft können damit bspw. Fehlscans wegen plötzlichen Fahrgeschwindigkeitsänderungen oder plötzlichen Fahrzeugstillständen verhindert werden. Stattdessen kann der Auslösezeitpunkt in naher Zukunft sehr präzise bestimmt werden, sodass zuverlässig der gewünschte Inspektionsabschnitt im Scannerbereich der Scannervorrichtung ist, wenn die Scannervorrichtung zum Auslösezeitpunkt ausgelöst wird.

In einer Ausführungsvariante weist das Inspektionsverfahren ferner ein Vorgeben eines gemeinsamen Zeitreferenzsystems (eine gemeinsame Zeitbasis) für das Sensorsystem und das Auslösen der Scannervorrichtung zum bestimmten mindestens einen Auslösezeitpunkt mittels eines (z. B. separaten) Zeitservers auf. Vorteilhaft kann damit eine sehr hohe Präzision des Inspektionsverfahren erreicht werden.

In einer weiteren Ausführungsvariante ist der mindestens eine gewünschte Inspektionsabschnitt ein Längsseiteninspektionsabschnitt des Fahrzeugs, ein Unterseiteninspektionsabschnitt des Fahrzeugs oder ein Oberseiteninspektionsabschnitt des Fahrzeugs.

In einem Ausführungsbeispiel erfolgt das Bestimmen des mindestens einen Auslösezeitpunkts ferner in Abhängigkeit von einem vorgegebenen Fahrzeugmodell, in dem der mindestens eine gewünschte Inspektionsabschnitt lokalisiert ist.

Ein weiterer Aspekt der vorliegenden Offenbarung betrifft ein (z. B voll- oder teilautomatisiertes) Inspektionssystem für ein Fahrzeug, vorzugsweise Schienenfahrzeug (z. B. Zug, wie Triebzug). Das Inspektionssystem weist mindestens eine, vorzugsweise kameragestützte, Scannervorrichtung (z. B. Dachscannervorrichtung(en), Unterfluscannervorrichtung(en) und/oder Längsseitenscannervorrichtung(en)) auf, die zum Scannen, vorzugsweise Aufnehmen, mindestens eines gewünschten Inspektionsabschnitts, vorzugsweise Längsseitenabschnitts oder Unterseitenabschnitts oder Oberseitenabschnitts, des Fahrzeugs angeordnet ist. Das Inspektionssystem weist ferner ein Sensorsystem (z. B. aufweisend mindestens einen binären Positionssensor und/oder mindestens eine Geschwindigkeitserfassungsvorrichtung) zum Erfassen des Fahrzeugs (z. B. entlang eines Fahrwegs) auf. Das Inspektionssystem weist ferner eine Verarbeitungsvorrichtung auf, die dazu konfiguriert ist, ein Inspektionsverfahren wie hierin offenbart auszuführen. Optional kann das Inspektionssystem ferner einen (z. B. separaten) Zeitserver aufweisen, der dazu konfiguriert ist, ein gemeinsames Zeitreferenzsystem für das Sensorsystem und/oder die Verarbeitungsvorrichtung vorzugeben. Optional kann das Inspektionssystem einen (z. B. vorgegebenen) Fahrweg (z. B. Schienen oder Straße) für das Fahrzeug aufweisen. Vorteilhaft können mit dem Inspektionssystem die gleichen Vorteile erzielt werden, die bereits unter Bezugnahme auf das Inspektionsverfahren erläutert wurden.

Vorzugsweise können mehrere Scannervorrichtungen umfasst sein, und die Verarbeitungsvorrichtung kann dazu konfiguriert sein, für jede der mehreren Scannervorrichtungen jeweils mindestens einen Auslösezeitpunkt zu bestimmen und die jeweilige Scannervorrichtung zu dem oder den jeweils bestimmten Auslösezeitpunkt(en) auszulösen.

Ein weiterer Aspekt der vorliegenden Offenbarung betrifft ein Computerprogrammprodukt aufweisend (z. B. mindestens ein computerlesbares Speichermedium mit darauf gespeicherten) Anweisungen, die ein Inspektionssystem, vorzugsweise wie hierin offenbart, veranlassen, ein Inspektionsverfahren wie hierin offenbart durchzuführen. Vorteilhaft können mit dem Computerprogrammprodukt die gleichen Vorteile erzielt werden, die bereits unter Bezugnahme auf das Inspektionsverfahren erläutert wurden.

Vorzugsweise kann sich der Begriff "Verarbeitungsvorrichtung" auf eine Elektronik (z. B. ausgeführt als eine Treiberschaltung oder mit Mikroprozessor(en) und Datenspeicher) beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Beispielsweise kann die Verarbeitungsvorrichtung eine zentrale Verarbeitungsvorrichtung sein. Alternativ kann die Verarbeitungsvorrichtung mehrere Verarbeitungseinheiten aufweisen, z. B. eine Recheninfrastruktur, wie ein Vorverarbeitungsrechner, und eine speicherprogrammierbare Steuerung (SPS).

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Darstellung eines Inspektionssystems gemäß einem Ausführungsbeispiel der vorliegenden Offenbarung; und
- Figur 2: eine schematische Darstellung eines Inspektionsverfahrens gemäß einem Ausführungsbeispiel der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

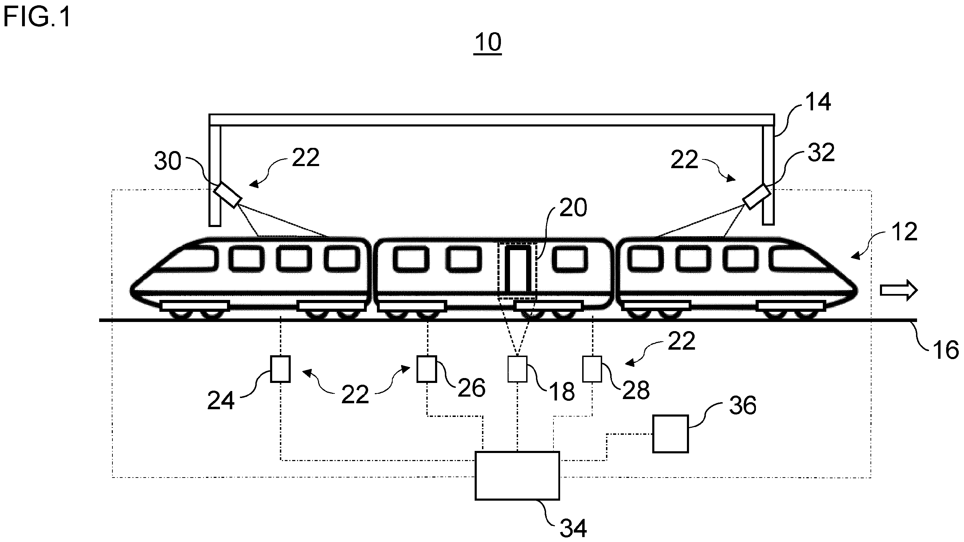

Die Figur 1 zeigt ein Inspektionssystem 10 zum Inspizieren eines Fahrzeugs 12, vorzugsweise während sich das Fahrzeug 12 bewegt.

Das Inspektionssystem 10 kann bspw. in einer Inspektionshalle 14 angeordnet sein. Es ist allerdings auch möglich, dass das Inspektionssystem 10 im Freien angeordnet ist. Es ist möglich, dass das Fahrzeug 12 länger ist als die Inspektionshalle 14.

Das Fahrzeug 12 kann Personen und/oder Güter transportieren. Bevorzugt ist das Fahrzeug 12 ein Landfahrzeug. Besonders bevorzugt ist das Fahrzeug 12 ein Schienenfahrzeug, wie in Figur 1 dargestellt ist. Das Schienenfahrzeug kann bspw. ein Zug, z. B. ein Triebzug, sein. Es ist allerdings auch möglich, dass das Fahrzeug 12 anders ausgeführt ist. Beispielweise kann das Fahrzeug 12 ein Kraftfahrzeug, z. B. Personenkraftwagen oder Lastkraftwagen oder Omnibus, ein Luftfahrzeug oder ein Wasserfahrzeug sein.

Das Fahrzeug 12 kann sich während der Inspektion entlang eines Fahrwegs 16 bewegen. Der Fahrweg 16 kann bspw. eine Schiene, eine Straße oder ein Wasserweg sein. Der Fahrweg 16 kann in der Inspektionshalle 14 verlaufen oder durch die Inspektionshalle 14 hindurch verlaufen, sofern die Inspektionshalle 14 vorhanden ist.

Das Inspektionssystem 10 weist mindestens eine Scannervorrichtung 18, ein Sensorsystem 22 und eine Verarbeitungsvorrichtung 34 auf. Optional kann das Inspektionssystem 10 ferner bspw. einen Zeitserver 36 aufweisen.

Die Scannervorrichtung 18 kann einen gewünschten Inspektionsabschnitt 20 des Fahrzeugs 12 scannen. Hierzu kann die Scannervorrichtung 18 zu einem zuvor bestimmten Auslösezeitpunkt ausgelöst bzw. getriggert werden. Die Scannervorrichtung 18 kann entsprechend als eine Trigger-Scannervorrichtung 18 ausgeführt sein.

Die Scannervorrichtung 18 ist vorzugweise kameragestützt. Beispielsweise kann die Scannervorrichtung 18 mindestens eine Kamera aufweisen. Die mindestens eine Kamera kann Bilder (Aufnahmen) von dem gewünschten Inspektionsabschnitt 20 aufnehmen. Die mindestens eine Kamera kann vorzugsweise eine Matrixkamera sein. Alternativ kann die Scannervorrichtung 18 bspw. ein anderes, vorzugsweise optisches, Aufnahme- oder Erfassungssystem aufweisen.

Der gewünschte Inspektionsabschnitt 20 kann bspw. ein Längsseiteninspektionsabschnitt des Fahrzeugs 12 sein, wie beispielhaft in Figur 1 dargestellt ist. Entsprechend kann die Scannervorrichtung 18 zum Scannen einer Längsseite des Fahrzeugs 12 angeordnet sein.

Alternativ kann der gewünschte Inspektionsabschnitt 20 bspw. ein Unterseiteninspektionsabschnitt (Unterflurinspektionsabschnitt) des Fahrzeugs 12 oder ein Oberseiteninspektionsabschnitt (Dachinspektionsabschnitt) des Fahrzeugs 12 sein (nicht in Figur 1 dargestellt). Entsprechend kann die Scannervorrichtung 18 zum Scannen einer Unterseite bzw. eines Bodens des Fahrzeugs 12 oder zum Scannen einer Oberseite bzw. eines Dachs des Fahrzeugs 12 angeordnet sein.

Es versteht sich, dass mehr als eine Scannervorrichtung 18 umfasst sein kann, sodass Abschnitte an unterschiedlichen Seiten des Fahrzeugs 12 gescannt werden können, wenn gewünscht. Es versteht sich ebenfalls, dass ein und dieselbe Scannervorrichtung 18 mehrfach bzw. zu mehreren bestimmten Auslösezeitpunkten bei ein und demselben Fahrzeug 12 ausgelöst/getriggert werden kann, um mehrere Inspektionsabschnitte 20 des Fahrzeugs 12 zu scannen.

Die Scannervorrichtung 18 kann eine statische bzw. stationäre Scannervorrichtung sein. Alternativ kann die Scannervorrichtung 18 dynamisch bzw. bewegbar sein. Beispielsweise kann die Scannervorrichtung 18 parallel zu dem Fahrweg 16 und/oder quer zu dem Fahrweg 16 und/oder vertikal bewegbar sein, z. B. während des Scannens und/oder zum Einstellen einer Scannerposition.

Es ist möglich, dass der Scannervorrichtung 18 ein Beleuchtungssystem zugeordnet ist (nicht gesondert in Figur 1 dargestellt). Das Beleuchtungssystem kann in Abhängigkeit von dem bestimmten Auslösezeitpunkt ein- und ausgeschaltet werden, sodass das Beleuchtungssystem zum Zeitpunkt des Scannens mit der Scannervorrichtung 18 den gewünschten Inspektionsabschnitt 20 beleuchtet.

Das Sensorsystem 22 überwacht eine aktuelle Fahrzeugposition des Fahrzeugs 12 entlang des Fahrwegs 16. Vorzugsweise kann das Sensorsystem 22 die aktuelle Fahrzeugposition des Fahrzeugs 12 entlang des Fahrwegs 16 verfolgen.

Das Sensorsystem 22 kann mehrere Sensorvorrichtungen 24 - 32 aufweisen. Bevorzugt kann die aktuelle Fahrzeugposition des Fahrzeugs 12 entlang des Fahrwegs 16 mittels Sensorfusion von Signalen der mehreren Sensorvorrichtungen 24 - 32 des Sensorsystems 22 erfolgen.

Bevorzugt kann das Sensorsystem 22 mindestens einen binären Positionssensor 24, 26, 28 aufweisen. Vorzugsweise sind mehrere binäre Positionssensoren 24, 26, 28 umfasst, wie nachfolgend beschrieben ist.

Die binären Positionssensoren 24, 26, 28 können voneinander beabstandet entlang des Fahrwegs 16 angeordnet sein. Bevorzugt sind die binären Positionssensoren 24, 26, 28 beidseitig entlang des Fahrwegs 16 angeordnet (nicht in Figur 1 dargestellt). Beispielsweise können die binären Positionssensoren 24, 26, 28 paarweise einander gegenüberliegend auf beiden Längsseiten des Fahrwegs 16 angeordnet sein.

Die binären Positionssensoren 24, 26, 28 können jeweils eine aktuelle Fahrzeugposition des Fahrzeugs 12 erfassen, wenn das Fahrzeug 12 den jeweiligen binären Positionssensor 24, 26, 28 passiert. Beim Passieren kann bspw. ein Lichtschrankenweg des jeweiligen binären Positionssensors 24, 26, 28 von dem Fahrzeug 12, z. B. von einem Rad des Fahrzeugs 12, blockiert werden. Ein Signal des jeweiligen binären Positionssensors 24, 26, 28 kann angeben, dass ein vorbestimmtes Teil des Fahrzeugs 12 den jeweiligen binären Positionssensor 24, 26, 28 passiert. Die binären Positionssensoren 24, 26, 28 können vorzugsweise so angeordnet sein, dass sie das Passieren eines Rads oder eines Fahrwerks oder eines Drehgestells des Fahrzeugs 12 erfassen können.

Beispielsweise können die binären Positionssensoren 24, 26, 28 als Lichtschranken o.Ä. ausgebildet sein.

Bevorzugt können die binären Positionssensoren 24, 26, 28 Absolutmessungen bezüglich der Fahrzeugposition durchführen. Beispielsweise kann durch das Durchbrechen der Lichtschranke indirekt, mithilfe von Stammdaten des Fahrzeugs 12 (bekannte Geometrie) die Position des Fahrzeugs 12 relativ zu der mindestens einen Scannervorrichtung 18 bestimmt werden.

Bevorzugt kann das Sensorsystem 22 mindestens eine Geschwindigkeitserfassungsvorrichtung 30, 32 aufweisen. Die mindestens eine Geschwindigkeitserfassungsvorrichtung 30, 32 kann eine aktuelle Fahrgeschwindigkeit des Fahrzeugs 12 entlang des Fahrwegs 16 überwachen.

Die Signale der mindestens einen Geschwindigkeitserfassungsvorrichtung 30, 32 können bspw. zum Erkennen eines Fahrzeuganfangs des Fahrzeugs 12 und/oder zum Erkennen eines Fahrzeugendes des Fahrzeugs 12 und/oder zum Erkennen von Wagenübergängen des Fahrzeugs 12 ausgewertet werden, um die Fahrgeschwindigkeit des Fahrzeugs 12 zu erfassen.

Bevorzugt ist die mindestens eine Geschwindigkeitserfassungsvorrichtung 30, 32 mindestens eine Lidarvorrichtung. Die Lidarvorrichtung kann eine Geschwindigkeit einer Fahrzeugseite des Fahrzeugs 12 (und damit eine Fahrgeschwindigkeit des Fahrzeugs 12) relativ zur Ausrichtung der Lidarvorrichtung, z. B. senkrecht zum Fahrweg 16 bzw. zur Fahrzeugseite, messen. Die Lidarvorrichtung kann bspw. als ein sogenanntes Laser Surface Velocimeter ausgeführt sein.

Alternativ oder zusätzlich kann die mindestens eine Geschwindigkeitserfassungsvorrichtung 30, 32 bspw. mindestens eine Radarvorrichtung sein. Die Radarvorrichtung kann eine Geschwindigkeit einer Fahrzeugseite des Fahrzeugs 12 (und damit eine Fahrgeschwindigkeit des Fahrzeugs 12) relativ zur Ausrichtung der Radarvorrichtung, z. B. im Winkel von ca. 45° zum Fahrweg 16 bzw. zur Fahrzeugseite, messen. Beispielsweise kann die Radarvorrichtung als ein sogenanntes Dauerstrichradar, Continuous Wave-Radar, CW-Radar, Moduliertes Dauerstrichradar, Frequency Modulated Continuous Radar oder FMCW-Radar ausgeführt sein.

Alternativ oder zusätzlich kann die mindestens eine Geschwindigkeitserfassungsvorrichtung 30, 32 bspw. mindestens eine Kameravorrichtung sein. So kann bspw. bei geeigneter Fahrzeugoberfläche (z. B. Strukturierung, Profilierung und/oder Texturierung) eine Kamera für Geschwindigkeitsmessungen verwendet werden. Dabei kann die Abschätzung der Fahrgeschwindigkeit bspw. über den Bildversatz innerhalb kleiner Zeitintervalle erfolgen.

Vorzugsweise sind mehrere Geschwindigkeitserfassungsvorrichtungen 30, 32 umfasst, z. B. zwei Lidarvorrichtungen, zwei Radarvorrichtungen und/oder zwei Kameravorrichtungen. Das Überwachen der aktuellen Fahrgeschwindigkeit kann vorzugsweise mittels Sensorfusion von Signalen der mehreren Geschwindigkeitserfassungsvorrichtungen 30, 32 erfolgen.

Die Verarbeitungsvorrichtung 34 kann in Kommunikationsverbindung mit der Scannervorrichtung 18 und dem Sensorsystem 22 stehen. Die Verarbeitungsvorrichtung 34 bestimmt den Auslösezeitpunkt für die Scannervorrichtung 18. Zum bestimmten Auslösezeitpunkt löst die Verarbeitungsvorrichtung 34 die Scannervorrichtung 18 aus.

Die Verarbeitungsvorrichtung 34 kann bspw. eine speicherprogrammierbare Steuerung (SPS) und einen Vorverarbeitungsrechner aufweisen.

Die SPS kann bspw. Signale von den binären Positionssensoren 24, 26, 28 und/oder den Geschwindigkeitserfassungsvorrichtungen 30, 32 verarbeiten und diese an den Vorverarbeitungsrechner weiterleiten. Die SPS kann bspw. das Erreichen des bestimmten Auslösezeitpunkts überwachen und die Scannervorrichtung 18 zum bestimmten Auslösezeitpunkt auslösen. Beispielsweise kann die SPS den Auslösezeitpunkt abwarten und dann ein analoges Signal zum Scannen, z. B. zur Bildaufnahme, an die jeweilige Scannervorrichtung 18 senden.

Der Vorverarbeitungsrechner kann die Scanneraufnahmen der Scannervorrichtung(en) 18 sowie (vorprozessierte) Sensordaten von der SPS empfangen. Der Vorverarbeitungsrechner kann die Scanneraufnahmen optional komprimieren und zur Weiterverarbeitung, z. B. für eine KI-gestützte Auswertung der Scanneraufnahmen, weiterleiten.

Der Zeitserver 36 kann ein gemeinsames Zeitreferenzsystem (eine gemeinsame Zeitbasis) für das Sensorsystem 22 und die Verarbeitungsvorrichtung 34 vorgeben. Beispielsweise können die Signale des Sensorsystems 22 mit einem Zeitstempel des gemeinsamen Zeitreferenzsystems versehen werden, z. B. mittels der Verarbeitungsvorrichtung 34, z. B. mittels der SPS der Verarbeitungsvorrichtung 34. Beispielsweise kann die Verarbeitungsvorrichtung 34 den Auslösezeitpunkt in dem gemeinsamen Zeitreferenzsystem bestimmen und das Auslösen zum bestimmten Auslösezeitpunkt bezüglich des gemeinsamen Zeitreferenzsystems vornehmen.

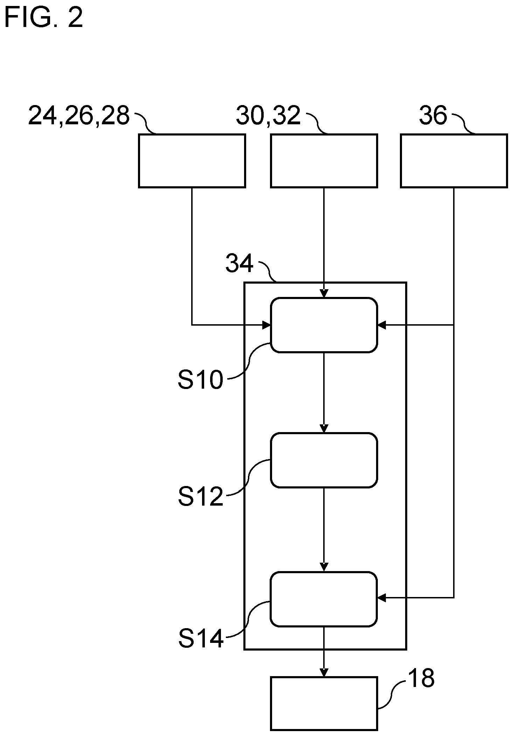

Die Figur 2 zeigt einen beispielhaften Ablauf eines Inspektionsverfahrens, bei dem die Verfahrensschritte S10 - S14 beispielhaft von der Verarbeitungsvorrichtung 34 durchgeführt werden.

In einem Schritt S10 wird eine aktuelle Fahrzeugposition des Fahrzeugs 12 entlang des Fahrwegs 16 überwacht. Hierfür können Signale von den binären Positionssensoren 24, 26 und/oder 28 verarbeitet werden.

Besonders bevorzugt wird im Schritt S10 zudem eine aktuelle Fahrgeschwindigkeit des Fahrzeugs 12 entlang des Fahrwegs 16 überwacht. Herfür können Signale von den Geschwindigkeitserfassungsvorrichtungen 30 und/oder 32 verarbeitet werden.

Mittels der überwachten aktuellen Fahrgeschwindigkeit des Fahrzeugs 12 kann die aktuelle Fahrzeugposition des Fahrzeugs 12 geschätzt (z. B. extrapoliert) werden. Im Einzelnen kann die aktuelle Fahrzeugposition aus einer zuletzt mittels eines binären Positionssensors 24, 26 oder 28 erfassten aktuellen Fahrzeugposition und der überwachten aktuellen Fahrgeschwindigkeit geschätzt werden.

Beispielsweise können als Lichtschranken ausgeführten Positionssensoren 24, 26, 28 verwendet werden, um die (absolute) Fahrzeugposition des Fahrzeugs 12 an bestimmten Punkten entlang des Fahrwegs 16 exakt zu erfassen. Zwischen diesen Punkten kann die Fahrzeugposition des Fahrzeugs 12 mithilfe der überwachten Fahrgeschwindigkeit geschätzt, z. B. extrapoliert, werden. Somit kann an Positionen, an denen keine Absolutpositionsmessung mittels der binären Positionssensoren 24, 26, 28 vorgenommen werden kann (z. B. zwischen den Wagenrädern), über eine Integration der Fahrgeschwindigkeit die aktuelle Fahrzeugposition extrapoliert werden.

Die Zeitserver 36 kann die Verarbeitung der Signale der binären Positionssensoren 24, 26, 28 und Geschwindigkeitserfassungssysteme 30, 32 mit einer gemeinsamen Zeitreferenzsystem ermöglichen.

In einem Schritt S12 wird der Auslösezeitpunkt in Abhängigkeit von der überwachten aktuellen Fahrzeugposition des Fahrzeugs 12 entlang des Fahrwegs 16 und ggf. in Abhängigkeit von der überwachten aktuellen Fahrgeschwindigkeit des Fahrzeugs 12 entlang des Fahrwegs 16 (vgl. Erläuterungen oben) bestimmt. Der Auslösezeitpunkt kann in der Zukunft liegen.

Das Bestimmen des Auslösezeitpunkts kann ferner in Abhängigkeit von einem vorgegebenen Fahrzeugmodell bezüglich des Fahrzeugs 12 erfolgen. In dem Fahrzeugmodell kann der gewünschte Inspektionsabschnitt, der von der Scannervorrichtung 18 zu scannen ist, lokalisiert sein. In dem Fahrzugmodell kann ein Referenzpunkt lokalisiert sein, für den die aktuelle Fahrzeugposition überwacht wird. In dem Fahrzeugmodell kann das Fahrzeug 12 bspw. geometrisch zumindest teilweise modelliert bzw. abgebildet sein.

Beispielsweise kann das Bestimmen des Auslösezeitpunkts erfolgen, wenn ein Abstand zwischen einer Position der Scannervorrichtung 18 und der überwachten aktuellen Fahrzeugposition kleiner oder gleich ein vorgegebener Abstandsgrenzwert ist. Der Abstandgrenzwert kann bspw. mittels einer Benutzerschnittstelle von einem Benutzer vorgegeben werden.

Alternativ oder zusätzlich kann das Bestimmen des Auslösezeitpunkts bspw. erfolgen, wenn eine Zeitdauer, bis das Fahrzeug 12 die Scannervorrichtung 18 erreicht, kleiner oder gleich ein vorgegebener Zeitgrenzwert ist. Der Zeitgrenzwert kann bspw. mittels einer Benutzerschnittstelle von einem Benutzer vorgegeben werden. Die Zeitdauer kann bspw. aus der überwachten aktuellen Fahrzeugposition und optional der überwachten aktuellen Fahrgeschwindigkeit des Fahrzeugs 12 ermittelt werden.

In einem Schritt S14 wird die Scannervorrichtung 18 zum Auslösezeitpunkt ausgelöst, vorzugsweise unter Verwendung des gemeinsamen Zeitreferenzsystems von dem Zeitserver 36. Zum Auslösezeitpunkt ist der gewünschte Inspektionsabschnitt 20 genau innerhalb des Scannfelds/Aufnahmebereichs der Scannervorrichtung 18. Die zum Auslösezeitpunkt ausgelöste Scannervorrichtung 18 scannt somit den gewünschten Inspektionsabschnitt 20 des Fahrzeugs 12.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart.

### Bezugszeichenliste

- 10: Inspektionssystem
- 12: Fahrzeug
- 14: Inspektionshalle
- 16: Fahrweg
- 18: Scannervorrichtung
- 20: Inspektionsabschnitt
- 22: Sensorsystem
- 24: binärer Positionssensor
- 26: binärer Positionssensor
- 28: binärer Positionssensor
- 30: Geschwindigkeitserfassungsvorrichtung
- 32: Geschwindigkeitserfassungsvorrichtung
- 34: Verarbeitungsvorrichtung
- 36: Zeitserver

## Patentansprüche

1. Inspektionsverfahren zum Inspizieren eines Fahrzeugs (12), vorzugsweise eines Schienenfahrzeugs, wobei das Inspektionsverfahren aufweist:
Überwachen, vorzugsweise Verfolgen, einer aktuellen Fahrzeugposition des Fahrzeugs (12) entlang eines Fahrwegs (16) für das Fahrzeug (12) mittels eines Sensorsystems (22);
Bestimmen mindestens eines Auslösezeitpunkts einer, vorzugsweise kameragestützten, Scannervorrichtung (18) in Abhängigkeit von der überwachten aktuellen Fahrzeugposition; und
Auslösen der Scannervorrichtung (18) zum bestimmten mindestens einen Auslösezeitpunkt zum Scannen mindestens eines gewünschten Inspektionsabschnitts (20) des Fahrzeugs (12).

2. Inspektionsverfahren nach Anspruch 1, wobei:
das Sensorsystem (22) mehrere Sensorvorrichtungen (24 - 32), vorzugsweise aufweisend mindestens einen binären Positionssensoren (24, 26, 28) und/oder mindestens eine Geschwindigkeitserfassungsvorrichtung (30, 32), aufweist.

3. Inspektionsverfahren nach Anspruch 2, wobei:
das Überwachen der aktuellen Fahrzeugposition eine Sensorfusion von Signalen der mehreren Sensorvorrichtungen (24-32) des Sensorsystems (22) aufweist.

4. Inspektionsverfahren nach einem der vorherigen Ansprüche, wobei:
das Sensorsystem (22) mindestens einen binären Positionssensor (24, 26, 28), vorzugsweise Lichtschranke, aufweist; und
ein Signal des mindestens einen binären Positionssensors (24, 26, 28) angibt, dass ein vorbestimmtes Teil des Fahrzeugs (12) den jeweiligen binären Positionssensor (24, 26, 28) passiert; und
das vorbestimmte Teil ein Rad oder ein Fahrwerk oder ein Drehgestell des Fahrzeugs (12) ist.

5. Inspektionsverfahren nach einem der vorherigen Ansprüche, wobei das Überwachen der aktuellen Fahrzeugposition aufweist:
Erfassen einer jeweils aktuellen Fahrzeugposition entlang des Fahrwegs (16) mittels mehrerer binärer Positionssensoren (24, 26, 28), vorzugsweise Lichtschranken, des Sensorsystems (22), wobei die mehreren binären Positionssensoren (24, 26, 28) voneinander beabstandet entlang des Fahrwegs (16) und/oder beidseitig entlang des Fahrwegs (16) angeordnet sind.

6. Inspektionsverfahren nach einem der vorherigen Ansprüche, ferner aufweisend:
Überwachen einer aktuellen Fahrgeschwindigkeit des Fahrzeugs (12) entlang des Fahrwegs (16) mittels mindestens einer Geschwindigkeitserfassungsvorrichtung (30, 32) des Sensorsystems (22),
wobei das Bestimmen des mindestens einen Auslösezeitpunkts ferner in Abhängigkeit von der überwachten aktuellen Fahrgeschwindigkeit des Fahrzeugs (12) erfolgt.

7. Inspektionsverfahren nach Anspruch 6, wobei das Überwachen der aktuellen Fahrzeugposition aufweist:
Schätzen, vorzugsweise Extrapolieren, der aktuellen Fahrzeugposition aus einer zuletzt mittels eines binären Positionssensors (24, 26, 28) des Sensorsystems (22) erfassten aktuellen Fahrzeugposition und der überwachten aktuellen Fahrgeschwindigkeit.

8. Inspektionsverfahren nach Anspruch 6 oder Anspruch 7, wobei bei dem Überwachen der aktuellen Fahrgeschwindigkeit:
die Signale der mindestens einen Geschwindigkeitserfassungsvorrichtung (30, 32) zum Erkennen eines Fahrzeuganfangs des Fahrzeugs (12) und/oder zum Erkennen eines Fahrzeugendes des Fahrzeugs (12) und/oder zum Erkennen mindestens eines Wagenübergangs des Fahrzeugs (12) ausgewertet werden.

9. Inspektionsverfahren nach einem der Ansprüche 6 bis 8, wobei:
das Überwachen der aktuellen Fahrgeschwindigkeit eine Sensorfusion von Signalen mehrerer Geschwindigkeitserfassungsvorrichtungen (30, 32) des Sensorsystems (22) aufweist.

10. Inspektionsverfahren nach einem der Ansprüche 6 bis 9, wobei die mindestens eine Geschwindigkeitserfassungsvorrichtung (30, 32) aufweist:
mindestens eine Lidarvorrichtung; und/oder
mindestens eine Radarvorrichtung; und/oder
mindestens eine Kameravorrichtung.

11. Inspektionsverfahren nach einem der vorherigen Ansprüche, wobei:
das Bestimmen des mindestens einen Auslösezeitpunkts erfolgt, wenn ein Abstand zwischen einer Position der Scannervorrichtung (18) und der überwachten aktuellen Fahrzeugposition kleiner oder gleich ein vorgegebener Abstandsgrenzwert ist; und/oder
das Bestimmen des mindestens einen Auslösezeitpunkts erfolgt, wenn eine Zeitdauer, bis das Fahrzeug (12) die Scannervorrichtung (18) erreicht, kleiner oder gleich ein vorgegebener Zeitgrenzwert ist, wobei vorzugsweise die Zeitdauer aus der überwachten aktuellen Fahrzeugposition und optional einer überwachten aktuellen Fahrgeschwindigkeit des Fahrzeugs (12) entlang des Fahrwegs (16) ermittelt wird.

12. Inspektionsverfahren nach einem der vorherigen Ansprüche, ferner aufweisend:
Vorgeben eines gemeinsamen Zeitreferenzsystems für das Sensorsystem (22) und das Auslösen der Scannervorrichtung (18) zum bestimmten mindestens einen Auslösezeitpunkt mittels eines Zeitservers (36).

13. Inspektionsverfahren nach einem der vorherigen Ansprüche, wobei:
der mindestens eine gewünschte Inspektionsabschnitt (20) ein Längsseiteninspektionsabschnitt des Fahrzeugs (12), ein Unterseiteninspektionsabschnitt des Fahrzeugs (12) oder ein Oberseiteninspektionsabschnitt des Fahrzeugs (12) ist; und/oder
das Bestimmen des mindestens einen Auslösezeitpunkts ferner in Abhängigkeit von einem vorgegebenen Fahrzeugmodell erfolgt, in dem der mindestens eine gewünschte Inspektionsabschnitt (20) lokalisiert ist.

14. Inspektionssystem (10) für ein Fahrzeug (12), vorzugsweise Schienenfahrzeug, wobei das Inspektionssystem (10) aufweist:
mindestens eine, vorzugsweise kameragestützte, Scannervorrichtung (18), die zum Scannen, vorzugsweise Aufnehmen, mindestens eines gewünschten Inspektionsabschnitts (20), vorzugsweise Längsseitenabschnitts oder Unterseitenabschnitts oder Oberseitenabschnitts, des Fahrzeugs (12) angeordnet ist;
ein Sensorsystem (22) zum Erfassen des Fahrzeugs (12); und
eine Verarbeitungsvorrichtung (34), die dazu konfiguriert ist, ein Inspektionsverfahren nach einem der vorherigen Ansprüche auszuführen; und optional
einen Zeitserver (36), der dazu konfiguriert ist, ein gemeinsames Zeitreferenzsystem für das Sensorsystem (22) und/oder die Verarbeitungsvorrichtung (34) vorzugeben.

15. Computerprogrammprodukt aufweisend Anweisungen, die ein Inspektionssystem (10), vorzugsweise nach Anspruch 14, veranlassen, ein Inspektionsverfahren nach einem der Ansprüche 1 bis 13 durchzuführen.
